# EUROPEAN PATENT APPLICATION

(11) **EP 3 239 897 A1**
(43) Date of publication of application: **01.11.2017**
(21) Application number: 16203876.4
(22) Date of filing: 13.12.2016
(51) Int. Cl.: G06K 9/00, G06K 9/46, G06K 9/62

(54) **METHOD AND APPARATUS FOR DETERMINING THE SIMILARITY BETWEEN MULTIVARIATE DATA SETS**

(30) Priority: 29.04.2016 GB 201607460; 29.04.2016 DE 102016207471
(71) Applicant: FUJITSU LIMITED, Kawasaki-shi Kanagawa 211-8588 (JP)
(72) Inventor: SNELLING, David, Flackwell Heath, Buckinghamshire HP10 9LR (GB); MENDES RODRIGUES, Eduarda, London, HA6 2NL (GB); GEORGESCU, Serban, London, W5 3JY (GB)
(74) Representative: Fenlon, Christine Lesley

(57) **Abstract**

A computer-implemented method of determining whether a first multivariate data set and a second multivariate data set are similar to one another includes an image creation process of creating, based on characteristics of the data in the first multivariate data set, a first representative image representing the first multivariate data set. The image creation process may comprise dividing the first multivariate data set into a plurality of data portions, obtaining a value for each parameter in each data portion, for each parameter assigning to each obtained parameter value an image attribute representing the obtained parameter value, and forming the representative image using the image attributes assigned to the obtained parameter values for the data portions. The method further includes an image comparison process of comparing the first representative image with a second representative image representing the second multivariate data set, wherein some or all of the image comparison process is carried out using a pre-trained image classification engine and similarity between the first and second multivariate data sets is determined on the basis of the result of the comparison between the first and second representative images.

## Description

The present invention relates to a method and apparatus for determining whether multivariate data sets are similar to one another.

A sequence of data can be treated directly by machine technologies by manually selecting appropriate significant features, such as maximum value, average value, average frequency, etc. These features can be fed into a machine learning application and used to identify what the sequence of data represents. However, such a manual feature selection process limits the amount of detail that can be presented to the machine learning application, particularly if the sequence of data is multivariate, i.e. there are two or more values associated with each portion of data (such as in a time series data set comprising a three dimensional accelerometer data stream, or in data relating to a collection of objects having a variety of different properties).

On the other hand, complex visual representations (or "signatures") of multivariate data streams, which are not suitable for direct human analysis, can represent time series data well enough for machine learning based classification.

Accordingly, it is desirable to provide a computer-implemented method of creating a visual representation of multivariate data sequences (including but not limited to time series data sets) suitable for machine learning applications.

According to an embodiment of a first aspect of the present invention there is provided a computer-implemented method of determining whether a first multivariate data set and a second multivariate data set are similar to one another, which method comprises: an image creation process of creating, based on characteristics of the data in the first multivariate data set, a first representative image representing the first multivariate data set; and an image comparison process of comparing the first representative image with a second representative image representing the second multivariate data set, wherein similarity between the first and second multivariate data sets is determined on the basis of the result of the comparison between the first and second representative images.

An advantage of an embodiment of the present invention is that it provides a way of computing the similarity of two multivariate data sets at a very high level of detail. In particular, an embodiment of the present invention provides a way of extracting a signature from multivariate data automatically and using that signature to compute the similarity between multivariate data sets. Powerful image classification engines can then be used to classify and identify what the data represents, e.g. the identity of a particular object or, in the case of a time series, perhaps a person walking or running. By creating an image representing multivariate data, a greater level of detail may be presented to the engine, thereby increasing the ability of the system to classify and identify the data set.

Preferably the image creation process comprises dividing the first multivariate data set into a plurality of data portions, obtaining a value for each parameter in each data portion, for each parameter assigning to each obtained parameter value an image attribute representing the obtained parameter value, and forming the representative image using the image attributes assigned to the obtained parameter values for the data portions. The image attributes may for example comprise one or more of: colour, position on image, pattern, size, shape and transparency, but could be any other suitable attribute. The obtained parameter value may for example be one of: an average value of the parameter in the data portion; a maximum value of the parameter in the data portion; a minimum value of the parameter in the data portion; and a standard deviation value of the parameter in the data portion, but could be any other suitable value.

The image comparison process may comprise extracting features from the first representative image as a vector of values, and computing the similarity between the extracted vector for the first representative image and a vector of values representing the features of the second representative image. Advantageously, the image comparison process may be carried out by a deep neural network trained for image recognition.

The second representative image may advantageously have been created by an image creation process similar to that used to create the first representative image.

A method embodying the present invention may further comprise carrying out, after the image comparison process, classification and/or identification of the series data set using a pre-trained image classification engine.

According to an embodiment of a second aspect of the present invention there is provided a computer program which, when run on a computer, causes that computer to carry out a method embodying the first aspect of the present invention.

According to an embodiment of a third aspect of the present invention there is provided similarity determination apparatus configured to determine whether a first multivariate data set and a second multivariate data set are similar to one another, which apparatus comprises: an image creation device configured to create, based on characteristics of the data in the first multivariate data set, a first representative image representing the first multivariate data set; and an image comparison device configured to compare the first representative image with a second representative image representing the second multivariate data set, the image comparison device being operable to determine similarity between the first and second multivariate data sets on the basis of the result of the comparison between the first and second representative images.

The image creation device may be operable to: divide the first multivariate data set into a plurality of data portions; obtain a value for each parameter in each data portion; for each parameter, assign to each obtained parameter value an image attribute representing the obtained parameter value; and form the representative image using the image attributes assigned to the obtained parameter values for the data portions. The image attributes may for example comprise one or more of: colour, position on image, pattern, size, shape and transparency, but could be any other suitable attribute. The obtained parameter value may for example be one of: an average value of the parameter in the data portion; a maximum value of the parameter in the data portion; a minimum value of the parameter in the data portion; and a standard deviation value of the parameter in the data portion, but could be any other suitable value.

If the first and second multivariate data sets are first and second multivariate time series data sets respectively, in a method or apparatus embodying the present invention the data portions advantageously comprise time slices.

The image comparison device may be operable to: extract features from the first representative image as a vector of values; and compute the similarity between the extracted vector for the first representative image and a vector of values representing the features of the second representative image. Advantageously, the image comparison device may be a deep neural network trained for image recognition.

The second representative image may advantageously have been created by an image creation device which is operable in a way similar to that used to create the first representative image.

Apparatus embodying the present invention may further comprise a pre-trained image classification engine configured to classify and/or identify the first data set after the similarity between the first and second multivariate data sets has been determined.

Reference will now be made, by way of example, to the accompanying drawings, in which:
Figure 1A is a flowchart of a method embodying the present invention, and Figure 1B is a diagram of apparatus embodying the present invention;
Figure 2 is a flowchart of a process for creating an image based on time series data;
Figure 3 shows an example of an image created using the process of Figure 2;
Figure 4 is a diagram illustrating a process for determining the similarity between two images created using the process of Figure 2;
Figures 5A to 5D show further examples of images created using the process of Figure 2; and
Figure 6 is a block diagram of a computing device suitable for carrying out a method embodying the present invention.

In embodiments of the present invention a single representative image, that is derived from details of a multivariate data set, is used to represent the data set. The representative image is then compared with a representative image for another data set to assess the similarity between the two data sets. In the description below a representative image is sometimes referred to as a "summary signature" or "summary image" or "signature" of the data set.

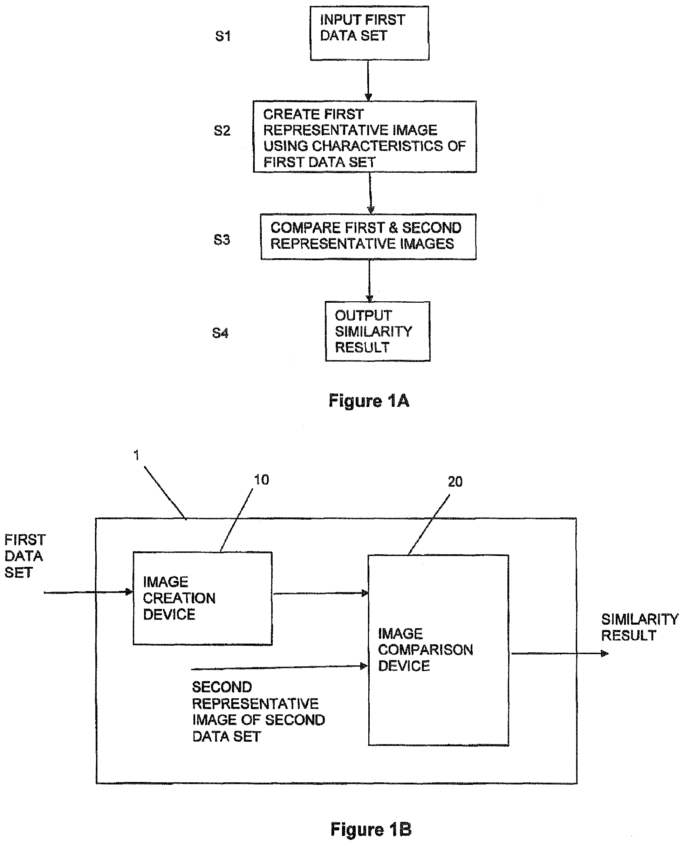

In particular, in a method embodying the present invention as shown in Figure 1A, a first multivariate data set is input (step S1) and then an image creation process is carried out (step S2) in which a first representative image representing the first multivariate data set is created, based on characteristics of the data in the first multivariate data set, and then an image comparison process is carried out in which the first representative image is compared with a second representative image representing a second multivariate data set. Similarity between the first and second multivariate data sets is determined on the basis of the result of the comparison between the first and second representative images. The second representative image has preferably been created by an image creation process similar to that used to create the first representative image.

Similarity determination apparatus 1 embodying the present invention is shown in Figure 1B, into which a first multivariate data set and a second representative image representing a second multivariate data set are input. The apparatus 1 comprises an image creation device 10 and an image comparison device 20. The image creation device 10 is configured to create, based on characteristics of the data in the first multivariate data set, a first representative image representing the first multivariate data set. The image comparison device 20 is configured to compare the first representative image with the second representative image, the image comparison device being operable to determine similarity between the first and second multivariate data sets on the basis of the result of the comparison between the first and second representative images.

That is, an embodiment of the present invention involves two main steps:
1.The creation of a summary signature (representative image)
2.The computation of similarity between two summary signatures (representative images)

The creation of the representative image (summary signature) involves converting the information in the data set to an image without losing detail. In one embodiment the process for creating a representative image may comprise dividing the first multivariate data set into a plurality of equal or non-equal portions and obtaining a value for each parameter in each portion. In the case of a time series data set, the portions may comprise time slices of uniform or non-uniform duration. In the case of a data portion in which there is more than one value for the parameter, the obtained parameter value may for example be an average value, a maximum value, a minimum value, or a standard deviation value, of the parameter in the data portion, or any other suitable value. For each parameter, an image attribute representing the obtained parameter value is then assigned to each obtained parameter value, and the representative image is formed using the image attributes assigned to the obtained parameter values for the data portions. For example, the image attributes may comprise one or more of: colour, position on image, pattern, size, shape and transparency.

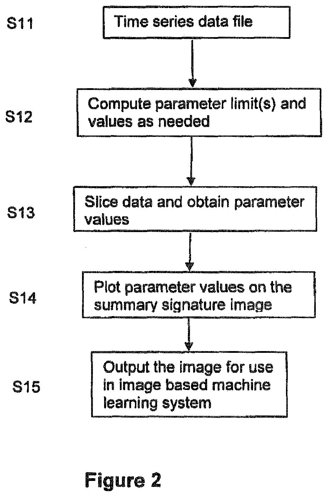

Such a process for creating a summary image in respect of a time series data set will now be described with reference to Figure 2. The process starts at step S11 with reading a time series file and then, in step S12, identifying the limits for each parameter. These limits are used to constrain the image to the right size. In step S13 the data is divided into time slices and values for each parameter in each slice are obtained (if there is more than one value for the parameter in a slice, average values for the parameters in the slice are obtained). In step S14 the parameter values are assigned respective image attributes which are used to build the image. In step S15 the image is output to an image-based machine learning system.

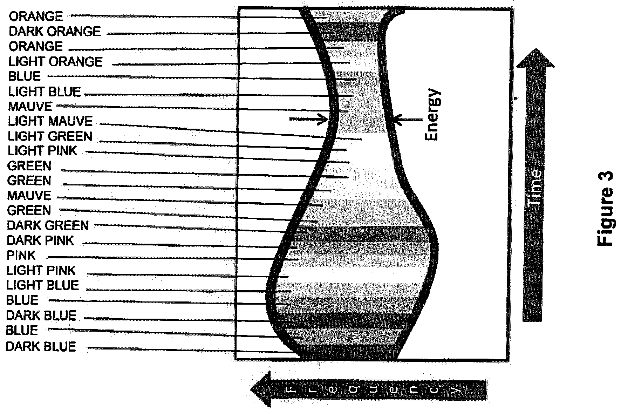

An example of a representative image creation process will now be described using a time series data set comprising multidimensional accelerometer data. Figure 3 shows an example of a representative image generated using the mapping process described below.
**1)Map time**: The whole representative image from left to right represents a time window (having a width such as 1 second, 10 seconds, a minute, etc.) of data from the data set divided into evenly-sized time slices. The choice of size of the time window can depend on the type of data and the resolution of the time slice. Each horizontal pixel or number of pixels in the image is a uniform slice of the whole time window.
**2)Map the axis of orientation of the acceleration values in each time slice to a first image attribute:** In this example, because image-based machine learning systems are good with colour (i.e. none of the detail will be lost in the analysis later on), the first image attribute is colour. That is, accelerometer data values in the X, Y and Z axes are mapped to Red, Green and Blue image values respectively, that is X → R, Y → G, Z → B. This creates a single coloured bar in the vertical direction that embodies all orientation information for the time slice concerned (please note that in this patent application Figure 3 cannot be in colour, but each vertical bar has been labelled to show the applicable colour).
**3) Map the energy of the acceleration in each time slice to a second image attribute:** In this example, the second image attribute is the height of each coloured bar. The height of the bar may be computed by simply calculating the sum of the squares of each of the three vectors, X, Y, and Z, and taking the square root.
**4)Map the frequency of the acceleration in each time slice to a third image attribute:** In this example, the third image attribute is the vertical position of the coloured bar on the image. A simple Fourier transform may be used to produce a spectrum of frequencies, and the most common frequency used to position the bar vertically.

Although the data has been mapped in the above example using the image attributes colour, height of coloured bar and vertical position on the image, other image attributes may be used in the invention as appropriate, for example pattern, shape, transparency, etc.

There are many possible ways of computing the similarity of two images. For example, this may be done by comparing the histograms of the images. In the embodiment described below however the similarity between two images is computed using deep-learning based machine vision techniques. Such techniques are well known in the art and are very robust to small image differences (i.e. they do not fail to identify similarities because of minor differences), while capturing the important characteristics. That is, in at least some embodiments of the present invention, some or all of the image comparison process may be carried out using a deep neural network trained for image recognition, the image comparison process comprising extracting features from the first representative image as a vector of values, and computing the similarity (for example, using cosine distance) between the extracted vector for the first representative image and a vector of values representing the features of the second representative image. Classification and identification of the first data set can then be carried out using a pre-trained image classification engine.

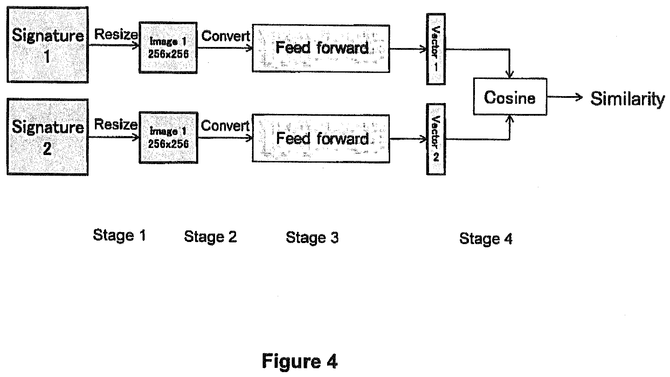

A deep neural network is an artificial neural network which can model complex nonlinear relationships and may be designed as a feedforward network. A well-known example of a deep neural network trained for image recognition is AlexNet (http://papers.nips.cc/paper/4824-imagenet-classification-with-deep-convolutional-neural-networks.pdf). This network takes as input RGB images of size 256x256 pixels and classifies them into 1000 categories. An image comparison process between two representative images carried out using such a deep neural network will now be described with reference to Figure 4.

Firstly (stage 1), two signature images 1 and 2 (first and second representative images) are input into the network and (if necessary) resized as 256x256 pixel images. Then (stage 2) the images are converted (by cropping, mean subtraction, channel sampling, etc.) and undergo a feed-forward step. For each image the data found in one of the final layers of the feed forward step is exported as a vector of values which represents the features of the image (stage 3). For example, if data is extracted from the last layer (named "fc8" in AlexNet), the network becomes a feature extractor which converts an arbitrary 256x256 RGB image to a vector with 1000 real-valued elements. The similarity between the resulting two feature vectors is then computed using the standard cosine distance (stage 4).

By way of example let us consider a three-dimensional wrist-worn accelerometer band. The data from the band is in the form of an acceleration in each axial direction once every 10 milliseconds (e.g. 100 Hz). In this example a 10 second activity will be analysed and the summary signature will consist of 100 vertical bars each expressing the data from 10 samples. As described above, the X, Y, and Z average acceleration values over each 10 samples are converted to a colour contribution in the RGB format. The average acceleration will be scaled to between 0 and 255 for a 255 deep colour image formulation. The height of the bar will represent the energy as a vector magnitude of the average acceleration across the 10 samples in all three dimensions. This number is also scaled to the image size and used to position the image on the page.

Two such images are then fed into the deep neural network and the feature vectors extracted as described above. Each vector captures 1000 features and the similarity between the two images can then be derived.

Desirably a labelling step is added so that specific activities (for example, walking, running, sleeping, etc.) can be identified.

A method embodying the present invention can also be applied to represent multi-sensor time series data sets, such as data from an accelerometer, gyroscope, magnetometer, etc. In such an instance, the resulting image may contain multiple subimages aligned on the time axis, each of which is prepared according to an embodiment of the present invention.

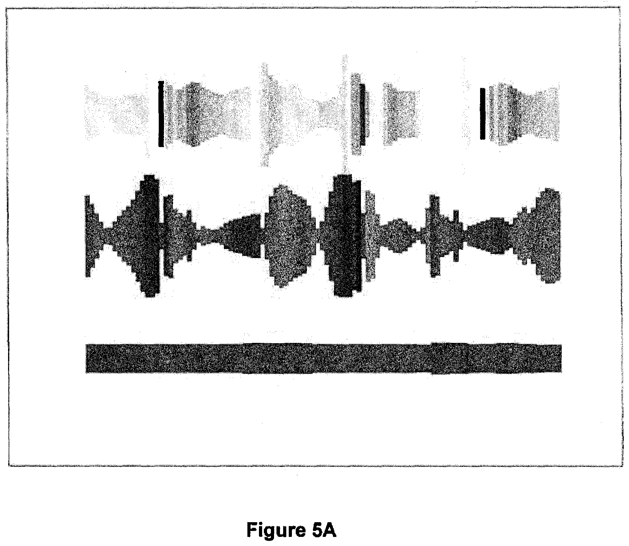

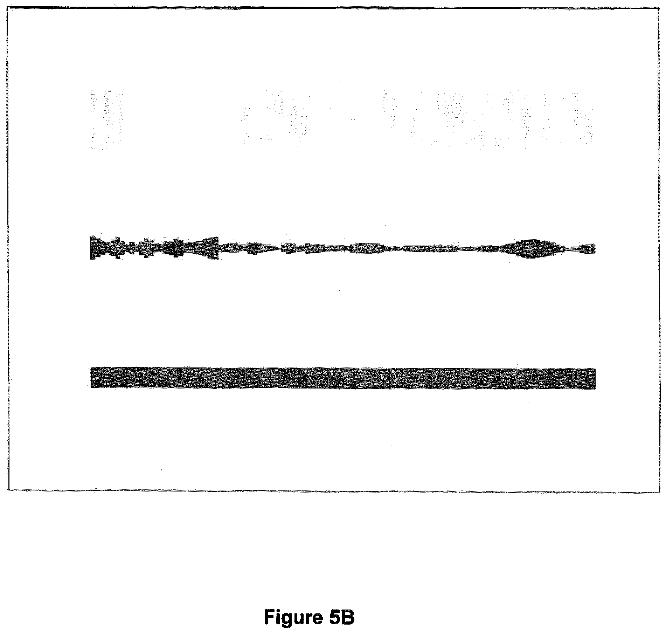

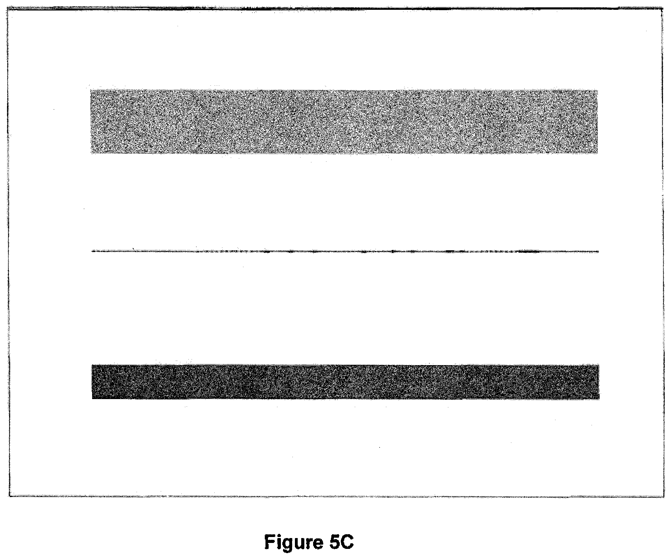

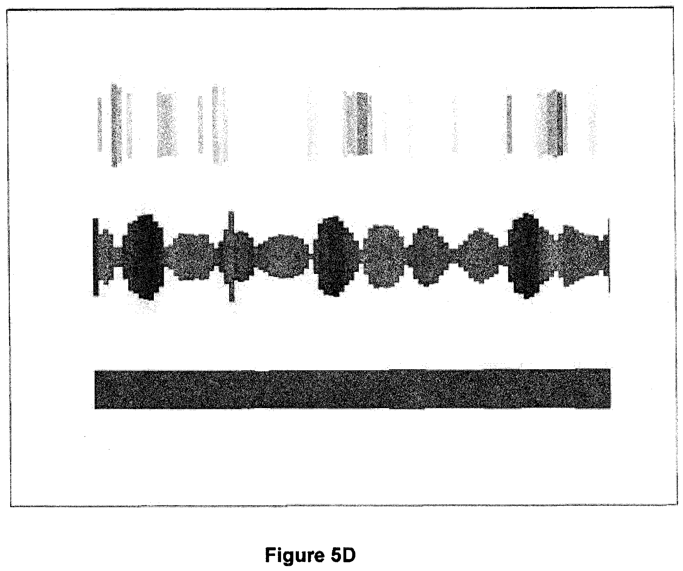

Figures 5A to 5D shows an example of the results of applying a method embodying the invention to a public dataset (from the UCI Machine Learning Repository (https://archive.ics.uci.edu/ml/datasets/Daily+and+Sports+Activities)) collected from a device worn on the right arm (RA) of one of the subjects (p03). Each plot in Figures 5A to 5D contains three subplots corresponding to data acquired from an accelerometer (top), a gyroscope (middle) and a magnetometer (bottom). Each of Figures 5A to 5D relates to a different activity. Figure 5A relates to descending stairs (activity a06, s01), Figure 5B relates to moving around in an elevator (activity a08, s01), Figure 5C relates to sitting (activity a01, s01), and Figure 5D relates to exercising on a stepper (activity a13, s01). (The plots shown in Figures 5A to 5D are not in colour, but would in a practical embodiment of the invention each comprise a series of vertical bars in various colours allotted according to the accelerometer data values in the X, Y and Z axes, as explained with reference to Figure 3).

As can be seen from Figures 5A to 5D, each activity has its own visual signature. This highlights the benefits of embodiments of the invention as a suitable approach to exploit in human activity classification systems.

Although embodiments of the invention have been described in relation to the field of measuring physical activity, the present invention can usefully be applied in any field where time series data emerges, including (but not limited to) finance, medicine, science in general, marketing, and business management, or in any other field generating multivariate non-time series data sequences.

Embodiments of the present invention may be implemented in hardware, or as software modules running on one or more processors, or on a combination thereof. That is, those skilled in the art will appreciate that a microprocessor or digital signal processor (DSP) may be used in practice to implement some or all of the functionality described above.

The invention may also be embodied as one or more device or apparatus programs (e.g. computer programs and computer program products) for carrying out part or all of the methods described herein. Such programs embodying the present invention may be stored on computer-readable media, or could, for example, be in the form of one or more signals. Such signals may be data signals downloadable from an Internet website, or provided on a carrier signal, or in any other form.

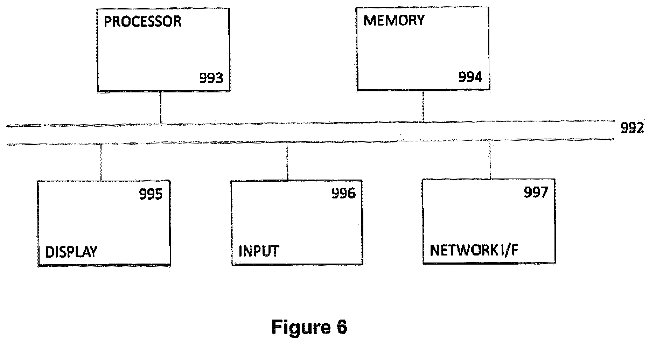

Figure 6 is a block diagram of a computing device, such as a data storage server, which embodies the present invention, and which may be used to implement some or all of the steps of a method embodying the present invention, and perform some or all of the tasks of apparatus of an embodiment. For example, the computing device of Figure 6 may be used to implement all the steps of the similarity determination method illustrated in Figure 1A and perform all the tasks of the similarity determination apparatus 1 shown in Figure 1B, or only to implement the method of Figure 2 and only to perform the tasks of the image creation device 10 in Figure 1B, or only to implement the method of Figure 4 and only to perform the tasks of the image comparison device 20 in Figure 1B.

The computing device comprises a processor 993, and memory, 994. Optionally, the computing device also includes a network interface 997 for communication with other such computing devices, for example with other computing devices of invention embodiments.

For example, an embodiment may be composed of a network of such computing devices. Optionally, the computing device also includes one or more input mechanisms such as keyboard and mouse 996, and a display unit such as one or more monitors 995. The components are connectable to one another via a bus 992.

The memory 994 may include a computer readable medium, which term may refer to a single medium or multiple media (e.g., a centralized or distributed database and/or associated caches and servers) configured to carry computer-executable instructions or have data structures stored thereon. Computer-executable instructions may include, for example, instructions and data accessible by and causing a general purpose computer, special purpose computer, or special purpose processing device (e.g., one or more processors) to perform one or more functions or operations. Thus, the term "computer-readable storage medium" may also include any medium that is capable of storing, encoding or carrying a set of instructions for execution by the machine and that cause the machine to perform any one or more of the methods of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 993 is configured to control the computing device and execute processing operations, for example executing computer program code stored in the memory 994 to implement the methods described with reference to Figures 1A, 2 and/or 4 and defined in the claims. The memory 994 stores data being read and written by the processor 993. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and steps discussed herein.

The display unit 995 may display a representation of data stored by the computing device and may also display a cursor and dialog boxes and screens enabling interaction between a user and the programs and data stored on the computing device. The input mechanisms 996 may enable a user to input data and instructions to the computing device.

The network interface (network I/F) 997 may be connected to a network, such as the Internet, and is connectable to other such computing devices via the network. The network I/F 997 may control data input/output from/to other apparatus via the network. Other peripheral devices such as microphone, speakers, printer, power supply unit, fan, case, scanner, trackerball etc may be included in the computing device.

Methods embodying the present invention may be carried out on a computing device such as that illustrated in Figure 6. Such a computing device need not have every component illustrated in Figure 6, and may be composed of a subset of those components. A method embodying the present invention may be carried out by a single computing device in communication with one or more data storage servers via a network. The computing device may be a data storage itself storing at least a portion of the data.

A method embodying the present invention may be carried out by a plurality of computing devices operating in cooperation with one another. One or more of the plurality of computing devices may be a data storage server storing at least a portion of the data.

The above-described embodiments of the present invention may advantageously be used independently of any other of the embodiments or in any feasible combination with one or more others of the embodiments. Although explanation has been given using the comparison of two multivariate data sets as an example, it will be understood that methods and apparatus embodying the present invention may be used in parallel or simultaneously to identify the similarity between more than two multivariate data sets.

## Claims

1. A computer-implemented method of determining whether a first multivariate data set and a second multivariate data set are similar to one another, which method comprises:
an image creation process of creating, based on characteristics of the data in the first multivariate data set, a first representative image representing the first multivariate data set; and
an image comparison process of comparing the first representative image with a second representative image representing the second multivariate data set, wherein similarity between the first and second multivariate data sets is determined on the basis of the result of the comparison between the first and second representative images.

2. A method as claimed in claim 1, wherein the image creation process comprises:
dividing the first multivariate data set into a plurality of data portions;
obtaining a value for each parameter in each data portion;
for each parameter, assigning to each obtained parameter value an image attribute representing the obtained parameter value; and
forming the representative image using the image attributes assigned to the obtained parameter values for the data portions.

3. A method as claimed in claim 2, wherein the image attributes comprise one or more of: colour, position on image, pattern, size, shape and transparency.

4. A method as claimed in claim 2 or 3, wherein the obtained parameter value is one of: an average value of the parameter in the data portion; a maximum value of the parameter in the data portion; a minimum value of the parameter in the data portion; and a standard deviation value of the parameter in the data portion.

5. A method as claimed in any preceding claim, where the first and second multivariate data sets are first and second multivariate time series data sets respectively.

6. A method as claimed in any preceding claim, wherein the image comparison process is carried out by a deep neural network trained for image recognition and comprises:
extracting features from the first representative image as a vector of values; and
computing the similarity between the extracted vector for the first representative image and a vector of values representing the features of the second representative image.

7. A method as claimed in any preceding claim, further comprising, after carrying out the image comparison process, carrying out classification and/or identification of the first time data set using a pre-trained image classification engine.

8. A computer program which, when run on a computer, causes that computer to carry out the method of any one of claims 1 to 7.

9. Similarity determination apparatus configured to determine whether a first multivariate data set and a second multivariate data set are similar to one another, which apparatus comprises:
an image creation device configured to create, based on characteristics of the data in the first multivariate data set, a first representative image representing the first multivariate data set; and
an image comparison device configured to compare the first representative image with a second representative image representing the second multivariate data set, the image comparison device being operable to determine similarity between the first and second multivariate data sets on the basis of the result of the comparison between the first and second representative images.

10. Apparatus as claimed in claim 9, wherein the image creation device is operable to:
divide the first multivariate data set into a plurality of data portions;
obtain a value for each parameter in each data portion;
for each parameter, assign to each obtained parameter value an image attribute representing the obtained parameter value; and
form the representative image using the image attributes assigned to the obtained parameter values for the data portions.

11. Apparatus as claimed in claim 10, wherein the image attributes comprise one or more of: colour, position on image, pattern, size, shape and transparency.

12. Apparatus as claimed in claim 10 or 11, wherein the obtained parameter value is one of: an average value of the parameter in the time slice; a maximum value of the parameter in the time slice; a minimum value of the parameter in the time slice; and a standard deviation value of the parameter in the time slice.

13. Apparatus as claimed in any one of claims 9 to 12, where the first and second multivariate data sets are first and second multivariate time series data sets respectively.

14. Apparatus as claimed in any one of claims 9 to 13, wherein the image comparison device is a deep neural network trained for image recognition which is operable to:
extract features from the first representative image as a vector of values; and
compute the similarity between the extracted vector for the first representative image and a vector of values representing the features of the second representative image.

15. Apparatus as claimed in one of claims 9 to 14, further comprising a pre-trained image classification engine configured to classify and/or identify the first time series data set after the similarity between the first and second multivariate time series data sets has been determined.
